Europäisches Patentamt

European Patent Office

Office européen des brevets

(11) Publication number: **0 124 254
B1**

(12) **EUROPEAN PATENT SPECIFICATION**

(45) Date of publication of the patent specification:
**11.03.87**

(21) Application number: **84302086.8**

(22) Date of filing: **28.03.84**

(51) Int. Cl.⁴: **A 23 L 1/237**

(54) Salt substitute composition.

(30) Priority: **30.03.83 US 480437**

(43) Date of publication of application:
**07.11.84 Bulletin 84/45**

(45) Publication of the grant of the patent:
**11.03.87 Bulletin 87/11**

(84) Designated Contracting States:
**AT BE CH DE FR GB IT LI LU NL SE**

(56) References cited:
**GB - A - 1 469 089
US - A - 2 742 366
US - A - 3 505 082
US - A - 4 216 244
US - A - 4 243 691
US - A - 4 340 614**

**The file contains technical information submitted after the application was filed and not included in this specification**

(73) Proprietor: **NABISCO BRANDS INC., Nabisco Brands Plaza, Parsippany New Jersey 07054 (US)**

(72) Inventor: **Arciszewski, Henry, 896 Colonial Road, Franklin Lakes New Jersey 07417 (US)**
Inventor: **Chiang, Bin Yea, 57-46 Hewlett Street, Littleneck New York 11362 (US)**
Inventor: **Hnat, Diane Louise, 44 South Main Street, Lodi New Jersey 07644 (US)**

(74) Representative: **Quest, Barry et al, SYDNEY E. M'CAW & Co. 41-51 Royal Exchange Cross Street, Manchester M2 7BD (GB)**

ACTORUM AG

## Description

This invention relates to a composition useful as a substitute for salt.

Many compositions have been developed as a replacement for common table salt, sodium chloride, for use in low sodium diets. In these salt substitute compositions, potassium chloride is widely used as a replacement for sodium chloride. Other ingredients are added to mask the bitter taste of the potassium ion and to minimize caking and dusting. Various sugars, including lactose, dextrose or glucose, fructose, sucrose, xylose, and maltose have been used to mask the bitter taste of the potassium ion. However, as disclosed in U.S. Patent 3,860,732, the use of lactose and/or dextrose blocks out the bitter taste of potassium chloride fairly well but a truly noticeable salty taste is not achieved. Cream of tartar (potassium bitartrate) is combined with the potassium chloride, lactose and/or dextrose to achieve a salty tasting product.

In U.S. Patent 4,243,691, a combination of ingredients is used to enhance the salty impression of potassium chloride without the associated bitter flavor. A 5'-nucleotide component, amino acid mixture, and sugar component, it is hypothesized, contribute to the mellowing and fullness of the flavor of the salt substitute. It is further hypothesized that potassium phosphate moderates the bitterness of the potassium chloride and contributes to the overall taste sensation of the salt substitute. Monosaccharides and disaccharides such as fructose, sucrose, glucose, xylose, lactose, maltose and mixtures thereof are disclosed as suitable sugar components. The sugar component is used in an amount of about 5% to about 20% by weight, preferably from about 8% to about 12% by weight of the salt substitute.

The bitter aftertaste usually accompanying the use of potassium chloride is masked with dipotassium succinate, dipotassium fumarate, and an optional amount of sugar in U.S. Patent 2,824,008. The preferred composition contains about 50 parts of dipotassium fumarate and 0.05 to 0.5 part, preferably 0.1 part of sugar. Further additives commonly employed in salt substitute compositions, such as anti-caking agents, diluents, binders, anti-dusting agents, preserving agents, and the like, it is disclosed, can also be added.

Glutamic acid and glutamate salts have also been used to mask the bitterness of potassium chloride and to provide a pleasant salty flavor to salt substitute compositions or low-sodium seasoning compositions. In U.S. Patent 2,596,333 a dietary substitute for table salt is obtained by coating particles of potassium chloride with glutamic acid. An inert binder is employed to firmly attach the coating to the particles of potassium chloride.

In U.S. Patent 2,910,369 sodium-free nitrite-nitrate meat curing is achieved using a curing composition containing potassium and calcium ions instead of sodium ions. Potassium glutamate and potassium chloride replace the sodium glutamate and the sodium chloride, respectively. The sodium-free meat curing compositions of U.S. Patent 2,910,369 may contain a sugar, such as dextrose, sucrose, or malt sugars, in an amount of between 0 to 21 parts. In U.S. Patent 4,216,244 a low sodium seasoning containing potassium chloride as its major ingredient is buffered and flavor enhanced by the use of potassium citrate, potassium phosphate, glutamic acid and monopotassium glutamate. Lactose is used as a diluent to result in a product which can be used on a 1:1 basis by volume as a substitute for ordinary salt. In U.S. Patent 2,742,366 a glutamate salt, preferably monocalcium glutamate, is combined with a mixture of from about 40% to about 90% by weight potassium chloride, and between about 5% to about 50% by weight of a sugar, based upon the weight of the composition. The glutamate salt is used in an amount of up to about 10% by weight of the composition. Sucrose, or a mixture of sucrose and dextrose in which the sucrose to dextrose ratio is between about 1:1 and about 1:3, are utilized. The addition of calcium chloride and tartaric acid in small amounts is disclosed as improving the composition.

It has been found that salt substitute compositions which contain a glutamate, such as potassium glutamate and a reducing sugar, such as dextrose or glucose, lactose, and maltose, are unstable, particularly under elevated storage conditions of about 126°F. The latter temperatures are often encountered during storage in a warehouse during summer months. The development of black spots or specks under such storage conditions is due to reaction between the reducing sugar and the potassium glutamate. In U.S. Patent 4,340,614 it is disclosed that in most commercially available salt substitute compositions, use of organic acids and potassium glutamate to compensate for the unpleasant bitter metallic taste of potassium chloride changes the taste, but does not result in the taste of sodium chloride. According to U.S. Patent 4,340,614, these taste disadvantages are avoided by using potassium adipate, adipic acid, and potassium inosate and/or potassium guanylate in addition to potassium glutamate. The adipic acid, potassium inosinate and/or potassium guanylate, it is disclosed, have an advantageous effect on the taste. However, potassium inosinate and potassium guanylate are expensive and possess strong meaty notes. Furthermore, it is disclosed that a residual, slightly metallic aftertaste, typical of potassium ions, is still present. This is compensated by adding an appropriate flavoring in an amount of from 0.005 to 0.1% by weight, based on total weight. The barbecue-type flavorings are indicated as being preferred for eliminating the potassium ion aftertaste. An ingredient in some of the flavoring mixtures disclosed by U.S. Patent 4,340,614 is sugar. However, in view of the minute amount of flavoring which is used, the amount of sugar based on the weight of the salt substitute composition would be negligible. Furthermore, a barbecue flavor would be objectionable on many foods in which the taste of only sodium chloride is desired. The undesirable production of black spots produced by reaction between potassium glutamate and reducing sugars is not recognized in this patent or in any of the above-discussed patents.

The present invention provides an inexpensive salt substitute composition having an appearance, a taste, and flowability resembling those of sodium chloride. The composition is shelf-stable under high temperature storage conditions wherein compositions containing a glutamate and a reducing sugar would result in the production of unsightly black spots.

Summary of the invention

The present invention relates to a salt substitute composition which has an appearance, taste and flowability resembling those of sodium chloride even after storage under high temperature conditions. The bitter, metallic taste of the potassium ion is masked by utilizing a non-reducing sugar, an edible organic acid and a glutamate salt. The potassium glutamate and the organic acid contribute to the impression of a saline taste. An anti-caking agent is used to enhance flowability. Use of a non-reducing sugar achieves the beneficial effect of masking the undesirable taste of the potassium ion. However, reaction with the glutamate to produce black spots, as do the reducing sugars, does not occur. The salt substitute composition of the present invention comprises from about 70% to about 98% by weight potassium chloride, from about 1% to about 20% by weight of a non-reducing sugar, preferably sucrose, from about 0.3% to about 15% by weight of an edible organic acid, preferably adipic acid, from about 0.5% to about 10% by weight of a glutamate salt, preferably potassium glutamate, and from about 0.15% to about 5% by weight of an anti-caking agent, preferably tricalcium phosphate, the sum of the percentages adding up to 100%. An iodized salt substitute is obtained by including up to about 0.01% by weight of potassium iodide based upon the total weight of the salt substitute composition.

Detailed description of the invention

The salt substitute of the present invention has potassium chloride as its major ingredient. Commercially available products conventionally used in the formulation of salt substitutes are suitable. It is convenient to use a potassium chloride which contains a highly dispersed silica to enhance the flow characteristics of the salt substitute. Such potassium chloride products are commercially available and typically contain from about 0.2 to 1.0% by weight silica, based upon the weight of the potassium chloride product.

The preferred non-reducing sugar is by far sucrose because of its low cost, good taste, and low hygroscopicity. Other non-reducing sugars, such as xylitol, sorbitol, and mixtures thereof with each other and preferably with sucrose can be used. The non-reducing sugar should be of low hygroscopicity or used with a sufficient amount of anti-caking agent so as to result in a salt substitute composition which is substantially non-agglomerating at room temperature (25 °C) and relative humidities as high as about 60% over extended periods of time. A non-reducing sugar is a carbohydrate that does not reduce Fehling's (or Benedict's) or Tollens' reagent and is inclusive of polyols such as xylitol and sorbitol. The non-reducing sugar masks the bitterness of the potassium ion and does not react with the glutamate component.

The glutamate salt and the edible organic acid contribute to the masking of the bitterness of the potassium ion. These two components also contribute to providing an impression of salinity. They are used in amounts which contribute salinity without providing other, undesirable, notes. Thus, if used in excessive amounts, the acid can result in an impression of high acidity for the salt substitute composition. Meaty notes may be detected upon excessive use of the glutamate salt.

Potassium glutamate is the preferred glutamate salt. Other glutamate salts conventionally used in salt substitute compositions can be used. However, the potassium ion is already present in large amounts because of the use of potassium chloride. Using glutamate salts other than potassium glutamate could introduce another flavor note.

Edible organic acids other than adipic acid can be used, such as fumaric, malic, citric, and tartaric acids, mixtures thereof with each other and with adipic acid. Adipic acid is preferred because of its non-hygroscopicity and because it contributes a particularly desirable bite or an impression of salinity to the salt substitute composition. Adipic acid is significantly less tart than other organic acids such as citric, fumaric, tartaric, and malic acids. Additionally, the chalky tartness of adipic acid is retained and stimulates the taste buds for a considerable time and serves to mask the undesirable aftertaste of the potassium ion and the meaty aftertaste of the glutamate ion. Fumaric acid, citric acid, and malic acid dissolve more rapidly and thus do not mask the bitter aftertaste of the potassium ion as effectively as adipic acid. Accordingly, adipic acid can be used in higher amounts for masking purposes without contributing undesirable acidic notes.

The preferred anti-caking agent is tricalcium phosphate. While other known anti-caking agents conventionally used in salt substitute compositions can be used, tricalcium phosphate has been found to be very effective in preventing caking in small packets. Other suitable anti-caking agents include calcium silicate, calcium aluminum silicate, monocalcium phosphate, dicalcium phosphate, calcium stearate, silicon dioxide or silica and mixtures thereof with each other and with tricalcium phosphate. The silica or silicon dioxide may be supplied in whole or in part as silica which is contained in the potassium chloride starting material.

The salt substitute composition of the present invention comprises from about 70% to about 98% potassium chloride, from about 1% to about 20% by weight of a non-reducing sugar, preferably sucrose, from about 0.15% to about 5% by weight of an anti-caking agent, preferably tricalcium phosphate, from about 0.2% to about 15% by weight of an edible organic acid, preferably adipic acid, and from about 0.5% to about 10% by weight of a glutamate, preferably potassium glutamate, said percentages adding up to 100%. When silica alone is used as an anti-caking agent, amounts over 2% by weight are usually not necessary to achieve sufficient flowability and anti-caking properties.

The exact value within the above ranges will depend upon the intended use of the salt substitute and the type of food upon which it is used. For example, higher amounts within the above range, of potassium glutamate can be used in a salt substitute composition which is applied to meat because slightly meaty notes would not be objectionable. However, meaty notes in a salt substitute composition which is applied as a condiment to a salad could be considered objectionable. Therefore, compositions used as a condiment for salads, vegetables, fish, and poultry should preferably contain less than about 5% by weight, most preferably about 1 to 2% by weight of the glutamate salt. The salt substitute of the present invention is suitably used on foods in substantially the same amounts as is sodium chloride.

The salt substitute compositions of the present invention preferably comprise from about 75% to about 85% by weight potassium chloride, from about 10% to about 16% by weight of a non-reducing sugar, preferably sucrose, from about 1% to about 3% by weight of an anti-caking agent, preferably tricalcium phosphate, from about 1% to about 5% by weight of an edible organic acid, preferably adipic acid, and from about 1% to about 5% by weight of a glutamate salt, preferably potassium glutamate, said percentages adding up to 100%. The most preferred salt substitute composition comprises about 79% to about 81% by weight potassium chloride, about 13% to about 15% by weight sucrose, about 2% by weight tricalcium phosphate, about 2% by weight adipic acid, and about 2% by weight potassium glutamate. These preferred and most preferred compositions are most suitable for topping or condiment applications.

Potassium iodide can be included in the salt substitute compositions of the present invention to obtain an iodized salt substitute. The potassium iodide is added in amounts conventionally used to obtain ordinary iodized table salt (sodium chloride). A typical amount of potassium iodide which can be used is up to about 0.01% potassium iodide by weight, based upon the weight of the salt substitute composition. Salt substitute flavorings, such as barbecue flavorings known in the art may also be included in conventional amounts to obtain a flavored salt substitute.

The salt substitute composition of the present invention can be prepared by conventional mixing techniques to obtain a substantially homogeneous mixture.

The components of the salt substitute composition should have comparable particle sizes to avoid particle separation upon storage. Commercially available edible organic acids such as adipic acid, and commercially available anti-caking agents such as tricalcium phosphate and silica generally have very fine particle sizes, typically less than about 80 mesh (US Standard Sieve). It has been found that a particle size distribution in the range of about 20 to about 60 mesh for each of the potassium chloride, non-reducing sugar, and glutamate salt components results in a substantially non-segregating, substantially homogeneous salt substitute composition with these anti-caking agents and edible organic acids. Potassium chloride, non-reducing sugars, such as sucrose, and glutamate salts, such as potassium glutamate are commercially available in the 20 to 60 mesh size range or may be processed by grinding, or the like, to the desired particle size range.

The components used to form the salt substitute composition should also have low moisture contents so as to avoid agglomeration upon storage. The final product should preferably have a moisture content of less than or equal to about 0.01% by weight to avoid agglomeration upon storage. This can be achieved by the use of ingredients having low moisture contents and/or by drying the components or the composition to the desired moisture content. The mixture can be packaged, in conventional fiber containers or individual serving paper packages or pouches for example, in known manner.

The present invention is further illustrated in the following examples wherein all parts and percentages are by weight unless otherwise indicated:

Example 1
Thoroughly mixed to provide a uniformly mixed sodium-free salt substitute are:

| Component | Parts by weight |
| --- | --- |
| KCl | 81 |
| Sucrose | 13 |
| Tricalcium phosphate | 2 |
| Adipic Acid | 2 |
| Potassium Glutamate | 2 |
| | 100 |

The composition and two popular commercially available salt substitute products were each admixed with mashed potatoes in a ratio of 2 grams of salt substitute per 1¾ cups of mashed potatoes. The mashed potatoes were then sampled by a taste panel of 24 non-expert members and were judged for taste. The two commercial products were Kochsalzersatz® manufactured by EM Chemicals, and No Salt® manufactured by Norcliff Thayer. The list of ingredients for Kochsalzersatz® was KCl, potassium glutamate, sorbitol instant, adipic acid, glutamic acid, potassium guanylate, calcium hydrogen phopsphate, and silicic acid. The list of ingredients for No Salt® were KCl.

potassium bitartrate, potassium glutamate, adipic acid, fumaric acid, polyethylene glycol 400, and disodium inosinate. The composition of the present invention was judged to have a taste at least as good as the taste of the two commercial products.

A 0.5 lb. (227 g) portion of each of the three compositions were placed in separate glass jars, the jars were covered and subjected to a storage temperature of 126°F (52.3°C). No discolorations were noted in any of the three compositions after one month at 126°F (52.2°C) but the product with the sorbitol instant was slightly agglomerated. However, it possessed satisfactory flowability. The agglomeration is attributed to the hygroscopicity of the sorbitol instant. Based upon the one month stability at 126°F (52.2°C), the salt substitute of the present invention would be expected to be stable under normal shelf-life conditions (about room temperature) for at least six months.

Example 2
A sodium-free salt substitute is prepared as in Example 1 using 1 part by weight adipic acid, 1 part by weight potassium glutamate and 15 parts by weight sucrose.

Example 3
A sodium-free salt substitute is prepared as in Example 1 except 81 parts by weight of potassium chloride containing silica as a flow enhancer are substituted for the 81 parts by weight of potassium chloride. The amount of silica is about 0.8% by weight of the potassium chloride.

Example 4
A sodium-free salt substitute is prepared as in Example 1 except 0.01 parts by weight of KI is added to obtain an iodized sodium-free salt substitute.

Example 5
A sodium-free salt substitute is prepared as in Example 1 except 2.75 parts by weight tricalcium phosphate and 0.25 parts by weight SiO$_2$ are used instead of the 2 parts by weight tricalcium phosphate and 80 parts by weight KCl are used instead of 81 parts by weight.

Example 6
A sodium-free salt substitute is prepared as in Example 2 using:

| Component | Parts by weight |
|---|---|
| KCl | 72 |
| Sucrose | 16 |
| Tricalcium phosphate | 1 |
| Adipic Acid | 10 |
| Potassium Glutamate | 1 |
| | 100 |

The composition is used in the preparation of pickled beets in an amount which is substantially the same as the amount of common table salt (sodium chloride) commonly used in the preparation of pickled beets.

Comparative Example
A sodium-free salt substitute composition is prepared as in Example 1 using:

| Component | Parts by weight |
|---|---|
| KCl | 85 |
| Dextrose | 10 |
| Tricalcium phosphate | 2 |
| Adipic Acid | 2 |
| Potassium Glutamate | 1 |
| | 100 |

A portion of the mixture was subjected to a storage temperature of 126°F (52.2°C) as in Example 1.The product had undesirable visually apparent black spots and agglomerations within one week.

**Claims for the contracting States: BE, CH, DE, FR, GB, IT, LI, LU, NL, SE**

1. A salt substitute comprising:
a) about 70% to about 98% by weight potassium chloride;
b) about 1% to about 20% by weight of a non-reducing sugar;
c) about 0.15% to about 5% by weight of an anti-caking agent;
d) about 0.3% to about 15% by weight of an edible organic acid;
e) about 0.5% to about 10% by weight of a glutamate salt;
characterized in that the percentages of ingredients a) to e) add up to 100%, in that the non-reducing sugar, edible organic acid, and glutamate salt each being present in effective amounts to mask the bitterness of the potassium ion, in that the amount of the organic acid and the glutamate salt is sufficient to contribute an impression of salinity to the salt substitute, and in that the salt substitute is substantially free of reducing sugars and is thereby rendered both substantially non-agglomerating and free of visually apparent black spots under storage conditions of 126°F (52.2°C) for at least one month.

2. A salt substitute as claimed in claim 1, characterized in that the non-reducing sugar is sucrose.

3. A salt substitute as claimed in claim 1 or 2, characterized in that the edible organic acid is adipic acid.

4. A salt substitute as claimed in any one of claims 1 to 3, characterized in that the glutamate salt is potassium glutamate.

5. A salt substitute as claimed in any one of claims 1 to 4, characterized in that the anti-caking agent is tricalcium phosphate.

6. A salt substitute as claimed in any one of claims 1 to 5, characterized in that the weight percent of the potassium chloride is from about 75% to about 85% by weight, the weight percent of the non-reducing sugar is from about 10% to about 16%, the weight percent of the anti-caking agent is from about 1% to about 3%, the weight percent of the edible organic acid is from about 1% to about 5%, and the weight percent of the glutamate salt is about 1% to about 5%.

7. A salt substitute as claimed in claim 6, characterized in that the weight percent of the glutamate salt is from about 1% to about 2%, and the weight percent of the edible organic acid is from about 1% to about 2%.

8. A salt substitute as claimed in any one of claims 1 to 7, characterized in that it further comprises from up to about 0.01% by weight of potassium iodide, based upon the weight of the salt substitute composition.

9. A salt substitute as claimed in any one of claims 1 to 8, characterized in that the anti-caking agent is a mixture of silica and tricalcium phosphate.

10. A salt substitute as claimed in any one of claims 1 to 9, characterized in that the anti-caking agent comprises from about 0.2% to about 1% by weight silica, based upon the weight of the potassium chloride.

11. A salt substitute as claimed in any one of claims 1 to 10, characterized in that it comprises 79% to about 81% by weight potassium chloride, about 13% to about 15% by weight sucrose, about 2% by weight tricalcium phosphate, about 2% by weight adipic acid, and about 2% by weight potassium glutamate, said percentages adding up to 100%.

**Claims for the contracting State: AT**

1. A process of forming a salt substitute characterized by mixing the following ingredients:
   a) about 70% to about 98% by weight potassium chloride;
   b) about 1% to about 20% by weight of a non-reducing sugar;
   c) about 0.15% to about 5% by weight of an anti-caking agent;
   d) about 0.3% to about 15% by weight of an edible organic acid;
   e) about 0.5% to about 10% by weight of a glutamate salt;
wherein the percentages of ingredients (a to e) add up to 100%, wherein the non-reducing sugar, edible organic acid, and glutamate salt each being present in effective amounts to mask the bitterness of the potassium ion, wherein the amount of the organic acid and the glutamate salt is sufficient to contribute an impression of salinity to the salt substitute, and wherein the salt substitute is substantially free of reducing sugars and is thereby rendered both substantially non-agglomerating and free of visually apparent black spots under storage conditions of 126°F (52.2°C) for at least one month.

2. A process as claimed in claim 1, characterized in that the non-reducing sugar is sucrose.

3. A process as claimed in claim 1 or 2, characterized in that the edible organic acid is adipic acid.

4. A process as claimed in any one of claims 1 to 3, characterized in that the glutamate salt is potassium glutamate.

5. A process as claimed in any one of claims 1 to 4, characterized in that the anti-caking agent is tricalcium phosphate.

6. A process as claimed in any one of claims 1 to 5, characterized in that the weight percent of the potassium chloride is from about 75% to about 85% by weight, the weight percent of the non-reducing sugar is from about 10% to about 16%, the weight percent of the anti-caking agent is from about 1% to about 3%, the weight percent of the edible organic acid is from about 1% to about 5%, and the weight percent of the glutamate salt is about 1% to about 5%.

7. A process as claimed in claim 6, characterized in that the weight percent of the glutamate salt is from about 1% to about 2%, and the weight percent of the edible organic acid is from about 1% to about 2%.

8. A process as claimed in any one of claims 1 to 7, characterized in that it further comprises from up to about 0.01% by weight of potassium iodide, based upon the weight of the salt substitute composition.

9. A process as claimed in any one of claims 1 to 8, characterized in that the anti-caking agent is a mixture of silica and tricalcium phosphate.

10. A process as claimed in any one of claims 1 to 9, characterized in that the anti-caking agent comprises from about 0.2% to about 1% by weight silica, based upon the weight of the potassium chloride.

11. A process as claimed in any one of claims 1 to 10, characterized in that it comprises 79% to about 81% by weight potassium chloride, about 13% to about 15% by weight sucrose, about 2% by weight tricalcium phosphate, about 2% by weight adipic acid, and about 2% by weight potassium glutamate, said percentages adding up to 100%.

12. A process of forming a salt substitute characterized by mixing the following ingredients:
   a) about 75% to about 85% by weight potassium chloride;
   b) about 10% to about 16% by weight of a non-reducing sugar;
   c) about 1% to about 3% by weight of an anti-caking agent;
   d) about 1% to about 5% by weight of an edible organic acid; and
   e) about 1% to about 5% by weight of a glutamate salt;
wherein the percentages of ingredients (a to e) add up to 100%, wherein the non-reducing sugar, edible organic acid, and glutamate salt each being present in effective amounts to mask the bitterness of the potassium ion, wherein the amount of the organic acid and the glutamate salt is sufficient to contribute an impression of salinity to the salt substitute, and wherein the salt substitute is substantially free of reducing sugars and is thereby rendered both substantially non-agglomerating and free of visually apparent black spots under storage conditions of 126 °F (52.2 °C) for at least one month.

13. A process according to claim 12, characterized in that 1% to 2% by weight of the glutamate salt is used.

14. A process according to claim 12 or 13, characterized in that the potassium chloride, non-reducing sugar and glutamate salt are used with a particle size in the range of about 20 to 60 mesh (US Standard Sieve).

15. A process according to claim 14, characterized in that the potassium chloride, the non-reducing sugar and the glutamate salt are processed by grinding to give the required particle size.

16. A process according to any one of claims 12 to 15, characterized in that the ingredients are dried to give a moisture content less than or equal to about 0.01% by weight.

17. A process according to any one of claims 12 to 16, characterized in that sucrose is used as the non-reducing sugar, tricalcium phosphate is used as the anti-caking agent, adipic acid is used as the edible organic acid, and potassium glutamate is used as the glutamate salt.

**Patentansprüche für die Vertragsstaaten: BE, CH, DE, FR, GB, IT, LI, LU, NL, SE**

1. Ein Salzersatzstoff enthaltend:
a) ca. 70 bis ca. 98 Gewichtsprozent Kaliumchlorid;
b) ca. 1 bis ca. 20 Gewichtsprozent nicht reduzierenden Zucker;
c) ca. 0,15 bis ca. 5 Gewichtsprozent eines Mittels gegen Zusammenbacken;
d) ca. 0,3 bis ca. 15 Gewichtsprozent einer geniessbaren organischen Säure;
e) ca. 0,5 bis ca. 10 Gewichtsprozent Glutaminatsalz;
dadurch gekennzeichnet, dass die Prozentanteile der Bestandteile a) bis e) sich zu 100% addieren, dass der nicht reduzierende Zucker, die geniessbare organische Säure und das Glutaminatsalz jeweils in wirksamen Mengen vorhanden sind, um die Herbheit des Kaliumions zu verdecken, dass die Menge der organischen Säure und des Glutaminatsalzes ausreicht, um zum Eindruck von Salzgehalt für den Salzersatz beizutragen, und dass der Salzersatz im wesentlichen frei von reduzierendem Zucker und dadurch dazu gebracht ist, dass bei Lagerungsbedingungen von 126 °F (52.2 °C) für wenigstens einen Monat er sowohl im wesentlichen nicht zusammenbackt als auch frei von optisch erkennbaren schwarzen Flecken ist.

2. Salzersatzstoff nach Anspruch 1, dadurch gekennzeichnet, dass der nicht reduzierende Zucker Sucrose ist.

3. Salzersatzstoff nach Anspruch 1 oder 2, dadurch gekennzeichnet, dass die geniessbare organische Säure Adipinsäure ist.

4. Salzersatzstoff nach einem der Ansprüche 1 bis 3, dadurch gekennzeichnet, dass das Glutaminatsalz Kaliumglutaminat ist.

5. Salzersatzstoff nach einem der Ansprüche 1 bis 4, dadurch gekennzeichnet, dass das Mittel gegen Zusammenbacken Tricalciumphosphat ist.

6. Salzersatzstoff nach einem der Ansprüche 1 bis 5, dadurch gekennzeichnet, dass der Gewichtsanteil des Kaliumchlorids ca. 75 bis ca. 85 Gewichtsprozent, der Gewichtsanteil des nicht reduzierenden Zuckers ca. 10 bis ca. 16%, der Gewichtsanteil des Mittels gegen Zusammenbacken ca. 1 bis ca. 3%, der Gewichtsanteil der geniessbaren organischen Säure ca. 1 bis ca. 5% und der Gewichtsanteil des Glutaminatsalzes ca. 1 bis ca. 5% beträgt.

7. Salzersatzstoff nach Anspruch 6, dadurch gekennzeichnet, dass der Gewichtsanteil des Glutaminatsalzes ca. 1 bis ca. 2% und der Gewichtsanteil der geniessbaren organischen Säure ca. 1 bis ca. 2% beträgt.

8. Salzersatzstoff nach einem der Ansprüche 1 bis 7, dadurch gekennzeichnet, dass er ausserdem ca. 0,01 Gewichtsprozent Jodkalium enthält, bezogen auf das Gewicht der Salzersatz-Zusammensetzung.

9. Salzersatzstoff nach einem der Ansprüche 1 bis 8, dadurch gekennzeichnet, dass das Mittel gegen Zusammenbacken ein Gemisch von Kieselsäure und Tricalciumphosphat ist.

10. Salzersatzstoff nach einem der Ansprüche 1 bis 9, dadurch gekennzeichnet, dass das Mittel gegen Zusammenbacken ca. 0,2 bis ca. 1 Gewichtsprozent Kieselsäure enthält, bezogen auf das Gewicht des Kaliumchlorids.

11. Salzersatzstoff nach einem der Ansprüche 1 bis 10, dadurch gekennzeichnet, dass er 79 bis ca. 81 Gewichtsprozent Kaliumchlorid, ca. 13 bis ca. 15 Gewichtsprozent Sucrose, ca. 2 Gewichtsprozent Tricalciumphosphat, ca. 2 Gewichtsprozent Adipinsäure und ca. 2 Gewichtsprozent Kaliumglutaminat aufweist, wobei sich diese Prozentsätze auf 100% addieren.

**Patentansprüche für den Vertragsstaat: AT**

1. Verfahren zur Bildung eines Salzersatzstoffes, gekennzeichnet durch die folgenden Bestandteile:
a) ca. 70 bis ca. 98 Gewichtsprozent Kaliumchlorid;
b) ca. 1 bis ca. 20 Gewichtsprozent nicht reduzierender Zucker;
c) ca. 0,15 bis ca. 5 Gewichtsprozent Mittel gegen Zusammenbacken;
d) ca. 0,3 bis ca. 15 Gewichtsprozent geniessbare organische Säure;
e) ca. 0,5 bis ca. 10 Gewichtsprozent Glutaminatsalz;
wobei sich die Prozentsätze der Bestandteile (a bis e) zu 100% addieren, wobei der nicht reduzierende Zucker, die geniessbare organische Säure und das Glutaminatsalz in wirksamen Mengen vorhanden sind, um die Herbheit des Kaliumions zu verdekken, wobei die Menge der organischen Säure und des Glutaminatsalzes ausreicht, um zum Eindruck von Salzgehalt für den Salzersatz beizutragen, und wobei der Salzersatzstoff im wesentlichen frei von reduzierendem Zucker und dadurch dazu gebracht ist, dass bei Lagerungsbedingungen von 126 °F (52.2 °C) für wenigstens einen Monat er sowohl im wesentlichen nicht zusammenbackt als auch frei von optisch erkennbaren schwarzen Flecken ist.

2. Verfahren nach Anspruch 1, dadurch gekennzeichnet, dass der nicht reduzierende Zucker Sucrose ist.

3. Verfahren nach Anspruch 1 oder 2, dadurch gekennzeichnet, dass die geniessbare organische Säure Adipinsäure ist.

4. Verfahren nach einem der Ansprüche 1 bis 3, dadurch gekennzeichnet, dass das Glutaminatsalz Kaliumglutaminat ist.

5. Verfahren nach einem der Ansprüche 1 bis 4, dadurch gekennzeichnet, dass das Mittel gegen Zusammenbacken Tricalciumphosphat ist.

6. Verfahren nach einem der Ansprüche 1 bis 5, dadurch gekennzeichnet, dass der Gewichtsanteil des Kaliumchlorids ca. 75 bis ca. 85 Gewichtsprozent, der Gewichtsanteil des nicht reduzierenden Zuckers ca. 10 bis ca. 16%, der Gewichtsanteil des Mittels gegen Zusammenbacken ca. 1 bis ca. 3%, der Gewichtsanteil der geniessbaren organischen Säure ca. 1 bis ca. 5% und der Gewichtsanteil des Glutaminatsalzes ca. 1 bis ca. 5% beträgt.

7. Verfahren nach Anspruch 6, dadurch gekennzeichnet, dass der Gewichtsanteil des Glutaminatsalzes ca. 1 bis ca. 2% und der Gewichtsanteil der geniessbaren organischen Säure ca. 1 bis ca. 2% beträgt.

8. Verfahren nach einem der Ansprüche 1 bis 7, dadurch gekennzeichnet, dass es ausserdem die Anwendung von Jodkalium bis zu ca. 0,01 Gewichtsprozent beinhaltet, bezogen auf das Gewicht der Salzersatz-Zusammensetzung.

9. Verfahren nach einem der Ansprüche 1 bis 8, dadurch gekennzeichnet, dass das Mittel gegen Zusammenbacken ein Gemisch von Kieselsäure und Tricalciumphosphat ist.

10. Verfahren nach einem der Ansprüche 1 bis 9, dadurch gekennzeichnet, dass das Mittel gegen Zusammenbacken ca. 0,2 bis ca. 1 Gewichtsprozent Kieselsäure enthält, bezogen auf das Gewicht des Kaliumchlorids.

11. Verfahren nach einem der Ansprüche 1 bis 10, dadurch gekennzeichnet, dass es die Anwendung von 79 bis ca. 81 Gewichtsprozent Kaliumchlorid, ca. 13 bis ca. 15 Gewichtsprozent Sucrose, ca. 2 Gewichtsprozent Tricalciumphosphat, ca. 2 Gewichtsprozent Adipinsäure und ca. 2 Gewichtsprozent Kaliumglutaminat beinhaltet, wobei sich diese Prozentsätze auf 100% addieren.

12. Verfahren zur Bildung eines Salzersatzstoffes, gekennzeichnet durch ein Gemisch folgender Bestandteile:

a) ca. 75 bis 85 Gewichtsprozent Kaliumchlorid;

b) ca. 10 bis 16 Gewichtsprozent nicht reduzierender Zucker;

c) ca. 1 bis 3 Gewichtsprozent Mittel gegen Zusammenbacken;

d) ca. 1 bis 5 Gewichtsprozent geniessbare organische Säure; und

e) ca. 1 bis 5 Gewichtsprozent Glutaminatsalz;

wobei sich die Prozentsätze der Bestandteile (a bis e) auf 100% addieren, wobei der nicht reduzierende Zucker, die geniessbare organische Säure und das Glutaminatsalz jeweils in ausreichenden Mengen vorhanden sind, um die Herbheit des Kaliumions zu verdecken, wobei die Menge der organischen Säure und des Glutaminatsalzes ausreicht, um zum Eindruck des Salzgehaltes des Salzersatzstoffes beizutragen, und wobei der Salzersatzstoff bei Lagerungsbedingungen von 126 °F (52.2 °C) für wenigstens einen Monat im wesentlichen frei von reduzierendem Zucker ist und dadurch dazu gebracht wird, dass er sowohl im wesentlichen nicht zusammenbackt als auch frei von optisch wahrnehmbaren schwarzen Flecken.

13. Verfahren nach Anspruch 12, dadurch gekennzeichnet, dass 1 bis 2% Glutaminatsalz verwendet wird.

14. Verfahren nach Anspruch 12 oder 13, dadurch gekennzeichnet, dass Kaliumchlorid, nicht reduzierender Zucker und Glutaminatsalz mit einer Partikelgrösse im Bereich von 20 bis 60 Maschen (US Standard Sieve) verwendet werden.

15. Verfahren nach Anspruch 14, dadurch gekennzeichnet, dass das Kaliumchlorid, der nicht reduzierende Zucker und das Glutaminatsalz durch Zermahlen hergestellt werden, um die erforderliche Partikelgrösse zu erhalten.

16. Verfahren nach einem der Ansprüche 12 bis 15, dadurch gekennzeichnet, dass die Bestandteile getrocknet werden, um einen Feuchtigkeitsgehalt zu erhalten, der kleiner oder gleich ca. 0,01 Gewichtsprozent ist.

17. Verfahren nach einem der Ansprüche 12 bis 16, dadurch gekennzeichnet, dass Sucrose als nicht reduzierender Zucker, Tricalciumphosphat als Mittel gegen Zusammenbacken, Adipinsäure als geniessbare organische Säure und Kaliumglutaminat als Glutaminatsalz verwendet werden.

**Revendications pour les Etats contractants: BE, CH, DE, FR, GB, IT, LI, LU, NL, SE**

1. Succédané de sel comprenant:

a) d'environ 70% à environ 98% en poids de chlorure de potassium;

b) d'environ 1% à environ 20% en poids d'un sucre non-réducteur;

c) d'environ 0,15% à environ 5% en poids d'un agent d'anti-agglomération;

d) d'environ 0,3% à environ 15% en poids d'un acide organique comestible;

e) d'environ 0,5% à environ 10% en poids d'un sel de glutamate;

caractérisé en ce que les pourcentages des ingrédients a) à e) s'élèvent ensemble à 100%, en ce que le sucre non-réducteur, l'acide organique comestible, et le sel de glutamate sont chacun présents en quantités efficaces pour masquer l'amertume de l'ion potassium, en ce que les quantités d'acide organique et de sel de glutamate sont suffisantes pour donner une impression de salinité au succédané de sel, et en ce que le succédané de sel est sensiblement dépourvu de sucres réducteurs et, ainsi, est rendu à la fois sensiblement non susceptible d'agglomération et dépourvu de points noirs visibles dans des conditions de stockage à 126°F (52,2°C) pendant au moins un mois.

2. Succédané de sel selon la revendication 1, caractérisé en ce que le sucre non-réducteur est du sucrose.

3. Succédané de sel selon la revendication 1 ou 2, caractérisé en ce que l'acide organique comestible est de l'acide adipique.

4. Succédané de sel selon l'une quelconque des revendications 1 à 3, caractérisé en ce que le sel de glutamate est du glutamate de potassium.

5. Succédané de sel selon l'une quelconque des revendications 1 à 4, caractérisé en ce que l'agent d'anti-agglomération est du phosphate de tricalcium.

6. Succédané de sel selon l'une quelconque des revendications 1 à 5, caractérisé en ce que le pourcentage pondéral du chlorure de potassium est compris entre environ 75% et environ 85% en poids, le pourcentage pondéral du sucre non-réducteur est compris entre environ 10% et environ 16%, le pourcentage pondéral de l'agent d'anti-agglomération est compris entre environ 1% et environ 3%, le pourcentage pondéral de l'acide organique comestible est compris entre environ 1% et environ 5%, et le pourcentage pondéral du sel de glutamate est compris entre environ 1% et environ 5%.

7. Succédané de sel selon la revendication 6, caractérisé en ce que le pourcentage pondéral du sel de glutamate est compris entre environ 1% et environ 2%, et le pourcentage pondéral de l'acide organique comestible est compris entre environ 1% et environ 2%.

8. Succédané de sel selon l'une quelconque des revendications 1 à 7, caractérisé en ce qu'il comprend de plus jusqu'à environ 0,01% en poids d'iodure de potassium, en se basant sur le poids de la composition de succédané de sel.

9. Succédané de sel selon l'une quelconque des revendications 1 à 8, caractérisé en ce que l'agent d'anti-agglomération est un mélange de silice et de phosphate de tricalcium.

10. Succédané de sel selon l'une quelconque des revendications 1 à 9, caractérisé en ce que l'agent d'anti-agglomération comprend entre environ 0,2 et environ 1% en poids de silice, en se basant sur le poids du chlorure de potassium.

11. Succédané de sel selon l'une quelconque des revendications 1 à 10, caractérisé en ce qu'il comprend entre environ 79% et environ 81% en poids de chlorure de potassium, entre environ 13% et environ 15% en poids de sucrose, environ 2% en poids de phosphate de tricalcium, environ 2% en poids d'acide adipique, et environ 2% en poids de glutamate de potassium, lesdits pourcentages totalisant 100%.

**Revendications pour l'Etat contractant: AT**

1. Procédé pour réaliser un succédané de sel, caractérisé par le fait de mélanger les ingrédients suivants:

a) d'environ 70% à environ 98% en poids de chlorure de potassium;

b) d'environ 1% à environ 20% en poids d'un sucre non-réducteur;

c) d'environ 0,15% à environ 5% en poids d'un agent d'anti-agglomération;

d) d'environ 0,3% à environ 15% en poids d'un acide organique comestible;

e) d'environ 0,5% à environ 10% en poids d'un sel de glutamate;

dans lequel les pourcentages des ingrédients a) à e) totalisent 100%, dans lequel le sucre non-réducteur, l'acide organique comestible et le sel de glutamate sont chacun présents en quantités efficaces pour masquer l'amertume de l'ion potassium, dans lequel les quantités d'acide organique et de sel de glutamate sont suffisantes pour donner une impression de salinité au succédané de sel, et dans lequel le succédané de sel est sensiblement dépourvu de sucres réducteurs et, ainsi, est rendu à la fois sensiblement non susceptible d'agglomération et dépourvu de points noirs visibles dans des conditions de stockage à 126°F (52,2°C) pendant au moins un mois.

2. Procédé selon la revendication 1, caractérisé en ce que le sucre non-réducteur est du sucrose.

3. Procédé selon la revendication 1 ou 2, caractérisé en ce que l'acide organique comestible est de l'acide adipique.

4. Procédé selon l'une quelconque des revendications 1 à 3, caractérisé en ce que le sel de glutamate est du glutamate de potassium.

5. Procédé selon l'une quelconque des revendications 1 à 4, caractérisé en ce que l'agent d'anti-agglomération est du phosphate de tricalcium.

6. Procédé selon l'une quelconque des revendications 1 à 5, caractérisé en ce que le pourcentage pondéral du chlorure de potassium est compris entre environ 75% et environ 85% en poids, le pourcentage pondéral du sucre non-réducteur est compris entre environ 10% et environ 16%, le pourcentage pondéral de l'agent d'anti-agglomération est compris entre environ 1% et environ 3%, le pourcentage pondéral de l'acide organique comestible est compris entre environ 1% et environ 5%, et le pourcentage pondéral du sel de glutamate est compris entre environ 1% et environ 5%.

7. Procédé selon la revendication 6, caractérisé en ce que le pourcentage pondéral du sel de glutamate est compris entre environ 1% et environ 2%, et le pourcentage pondéral de l'acide organique comestible est compris entre environ 1% et environ 2%.

8. Procédé selon l'une quelconque des revendications 1 à 7, caractérisé en ce qu'il comprend de plus jusqu'à environ 0,01% en poids d'iodure de potassium, en se basant sur le poids de la composition de succédané de sel.

9. Procédé selon l'une quelconque des revendications 1 à 8, caractérisé en ce que l'agent d'anti-agglomération est un mélange de silice et de phosphate de tricalcium.

10. Procédé selon l'une quelconque des revendications 1 à 9, caractérisé en ce que l'agent d'anti-agglomération comprend entre environ 0,2% et environ 1% en poids de silice, en se basant sur le poids du chlorure de potassium.

11. Procédé selon l'une quelconque des revendications 1 à 10, caractérisé en ce qu'il comprend de 79% à environ 81% en poids de chlorure de potassium, d'environ 13% à environ 15% en poids de sucrose, environ 2% en poids de phosphate de tricalcium, environ 2% en poids d'acide adipique, et environ 2% en poids de glutamate de potassium, lesdits pourcentages totalisant 100%.

12. Procédé pour réaliser un succédané de sel, caractérisé par le fait de mélanger les ingrédients suivants:

a) d'environ 75% à 85% en poids de chlorure de potassium;

b) d'environ 10% à 16% en poids d'un sucre non-réducteur;

c) d'environ 1% à 3% en poids d'un agent d'anti-agglomération;

d) d'environ 1% à 5% en poids d'un acide organique comestible; et

e) d'environ 1% à 5% en poids d'un sel de glutamate;

dans lequel les pourcentages des ingrédients a) à e) totalisent 100%, dans lequel le sucre non-réducteur, l'acide organique comestible et le sel de glutamate sont chacun présents en quantités efficaces pour masquer l'amertume de l'ion potassium, dans lequel les quantités d'acide organique et de sel de glutamate sont suffisantes pour donner une impression de salinité au succédané de sel, et dans lequel le succédané de sel est sensiblement dépourvu de sucres réducteurs et, ainsi, en conséquence, est rendu à la fois sensiblement non susceptible d'agglomération et dépourvu de points noirs visibles dans des conditions de stockage à 126°F (52,2°C) pendant au moins un mois.

13. Procédé selon la revendication 12, caractérisé en ce que de 1% à 2% en poids du sel de glutamate sont utilisés.

14. Procédé selon la revendication 12 ou 13, caractérisé en ce que le chlorure de potassium, le sucre non-réducteur et le sel de glutamate sont utilisés en ayant une taille de particules dans le domaine d'environ 20 à 60 mesh (US Standard Sieve).

15. Procédé selon la revendication 14, caractérisé en ce que le chlorure de potassium, le sucre non-réducteur et le sel de glutamate sont traités par broyage pour fournir la taille de particules requise.

16. Procédé selon l'une quelconque des revendications 12 à 15, caractérisé en ce que les ingrédients sont séchés pour fournir une teneur en humidité inférieure ou égale à environ 0,01% en poids.

17. Procédé selon l'une quelconque des revendications 12 à 16, caractérisé en ce que du sucrose est utilisé comme sucre non-réducteur, du phosphate de tricalcium est utilisé comme agent d'anti-agglomération, de l'acide adipique est utilisé comme acide organique comestible, et du glutamate de potassium est utilisé comme sel de glutamate.